# EUROPEAN PATENT SPECIFICATION

(11) **EP 2 874 957 B1**
(45) Date of publication and mention of the grant of the patent: **01.11.2017**
(21) Application number: 13739391.4
(22) Date of filing: 12.07.2013
(51) Int. Cl.: C02F 9/00, C02F 11/14, C02F 1/66, C02F 1/72, C02F 1/52, C02F 1/56, C02F 11/12, C02F 103/20, C02F 103/22, C02F 103/32

(54) **METHOD OF TREATING A DIGESTATE FROM A BIOGAS PROCESS**
VERFAHREN ZUR BEHANDLUNG EINES GÄRRESTES AUS EINEM BIOGASPROZESS
PROCÉDÉ DE TRAITEMENT D'UN DIGESTAT ISSU D'UN PROCESSUS DE FORMATION DE BIOGAZ

(30) Priority: 20.07.2012 SE 1250887
(43) Date of publication of application: 27.05.2015
(73) Proprietor: KEMIRA OYJ, 00180 Helsinki (FI)
(72) Inventor: GRÖNFORS, Outi, FI-02270 Espoo (FI); WIKTORSSON, Håkan, 23735 Bjärred (SE); RECTENWALD, Michael, 02230 Espoo (FI)
(74) Representative: Awapatent AB
(86) International application number: PCT/EP2013/064845
(87) International publication number: WO 2014/012865

(56) References cited:
- US-A1- 2005 000 908
- US-A1- 2005 077 245
- US-B1- 6 368 511

## Description

### Field of the art

The present invention relates to treatment of digested organic matter.

### Backgound

Today a lot of focus is on sustainable energy sources. The production of biogas from organic materials is one such energy source. By subjecting a feedstock of organic materials to a digestion, biogas is obtained. The residue obtained, the digestate, may then be processed further. As the demand for sustainable energy sources grow also the residues coming from such processes grow. The residues are to be degraded and dewatered as much as possible. The type of material fed into a digestion chamber may vary. However, some types of feedstocks are more difficult to degrade and dewater than others due to the nature of the feed material. There is a need to obtain more efficient treatment methods for digested organic material.

### Summary of the present invention

The present invention provides a process for treating digested matter supplied from a biogas plant. Using the present process the dewatered residues from a biogas plant may be divided into two sections, the solid part and the liquid part. The liquid part, which mainly is water, is discharged after the dewatering. If the liquid part is clean enogh it may be forwarded to sewer systems. The solid part, may be used as fill mass (also called filling material) during lansdcaping, or as base course. If the solid part contains any nutrients it may be put onto lands as fertilization.

The present method relates to treating a slurry comprising a digestate from a biogas plant, which biogas plant is fed a feedstock comprising about 50 to 100 weight-% of products and wastes from farms, and/or food and beverage handling, said method comprising the steps of:
a) providing the slurry comprising a digestate from a biogas plant,
b) obtaining an acidic slurry at a pH of at most 6.5, by addition of an acidic material to lower the pH of the slurry comprising a digestate from a biogas plant, if the slurry comprising a digestate from a biogas plant is not already at a pH of at most 6.5,
c) supplying the slurry with an iron salt,
d) supplying the slurry with an oxidiser selected from hydrogen peroxide and percompounds, and allowing to react,
e) adding a flocculating polymer to the slurry obtained in d),
f) dewatering the slurry obtained in e),
wherein steps b) to d) may be performed in any order or some or all may be performed simultaneously.

Steps b) to d) may be performed in any order or some or all may be performed simultaneously. Also, in one embodiment step b) and c) may be performed simultaneously using the same added material, i.e. an iron salt. In another embodiment step b) and c) may be performed simultaneously using the same added material, i.e. a percompound.

According to one embodiment the dry solids content of the digestate may be from 2 to 15 weight-%. The acidic slurry is obtained by addition of acid and/or with iron salt. The pH of the acidic slurry is preferably between 3.0 and 6.5, preferably 3.0 to 6.0, more preferably 3.5 to 6.0. The amount of iron added is about 5-70 kg/ton dry solids of the digestate. The amount of iron disclosed above is iron itself and not the iron salt. The iron salt is preferably a divalent iron salt, e.g. chosen from iron sulphate and iron chloride.

The oxidiser is selected from hydrogen peroxide and/or percompounds. Examples of suitable percompounds are performic acid and peracetic acid. The oxidizer is added in an amount of 5-50 kg/ton dry solids of the digestate.

According to another embodiment the iron salt and oxidiser may be added to the slurry and allowed to react with the slurry. The residence time may be at least 5 min, preferably at least 10 min more preferably at least 30 min.
According to one embodiment the flocculating polymer may be added in an amount of 1-10 kg/ton dry solids of the digestate. The flocculating polymer may be a polyacrylamide that can be anionic, cationic or nonionic or cationic polysaccharide, like cationic starch or chitos. Amongst polyacrylamides cationic polyacrylamide may be preferred. Also for example polyamine can be used.

According to one embodiment the digestate may originate from digestion of a feedstock comprising materials from the food and beverage processing industry, agricultural wastes and/or crops, preferably maize containing materials, preferably maize.

According to one embodiment the feedstock preferably comprise at least 40 weight-% preferably 50 weight-% more preferably 80 weight-% maize.

### Detailed description of the exemplary embodiments

The present method treats digested matter,i.e. anaerobically treated matter, which matter is supplied from a biogas plant.

The biogas plant is fed a feedstock comprising about 50 to 100 weight-% of products and wastes from farms, and/or food and beverage handling, e.g. about 75 to 100 weight-%.

The digested material, digestate, used as a feedstock is treated at a temperature of 0-100°C, e.g. 20-70°C.

In one embodiment the slurry comprising a digestate may in addition to the digestate comprise additional water. In another embodiment the slurry comprising a digestate may consist only of digestate.

In the present process the pH of the slurry containing the digestate is within a range of at most 6.5, preferably at most 6.0 but at least 3.0, preferably at least 3.5. The pH may be obtained by addition of an acid and/or iron salt. The acid may be a mineral acid or an organic acid.

The solids content of the feedstock may vary depending on the material used for the feedstock. As dislosed above the dry solids content of the digestate is from 2 to 15 % by weight, such as 2.5 to 15 % by weight. If the material used is mainly derived from food waste the dry solids content of the formed digestate could be about 2-5 % by weight, such as about 2-3 weight-%. If the material used is mainly derived from manure the dry solids content of the formed digestate could be about 9-12 % by weight, such as about 10-11 weight-%

The slurry is made to contain added iron, preferably in an amount of 5-70 kg/ton dry solids (DS) of the digestate. The iron added may also influence the pH as indicated above. The iron added is an iron salt. Preferably the iron salt added is an iron(II) compound, e.g. iron sulphate or iron chloride. The iron salt added may also be the additive responsible for achieving the desired pH. Thus, in one embodiment steps a) and b) of the present method may be performed using only addition of iron salt.

Oxidiser is added to the mixture. Oxidiser is added in an amount of 5-50 kg/ton dry solids (DS) of the digestate. As an example the amount of oxidiser may be 10-50 kg/ton dry solids (DS) of the digestate. The oxidiser is chosen from hydrogen peroxide and percompounds. Examples of percompounds are performic and peracetic acid. If a percompound, e.g. performic and peracetic acid, is used as oxidiser, the percompound may also be the additive responsible for achieving the desired pH.

The added components are allowed to react with the digestate containing slurry. The residence time during the reaction may e.g. be at least 5 min or at least 10 min.

After the iron salt and the oxidiser have reacted with the slurry a flocculating polymer is added to the mixture. In one embodiment a flocculating polymer is added in an amount of 1-10 kg/ton dry solids (DS) of the treated digested material. As an example of a suitable flocculating polymer, polyacrylamide may be mentioned, more preferably cationic polyacrylamide. If needed, the pH may be adjusted before dewatering.

The treated slurry material is thereafter dewatered with a dewatering means. Examples of dewatering means are screw press, decanter centrifuge, belt filter press, Bucher press, etc.

The digestate used in the present method originates from digestion of a feedstock of products and/or wastes from farms and/or food and beverage handling. Products and wastes from food and beverage handling include materials from the food and beverage processing industry; organic fraction of urban wastes which includes municipal household waste and waste from restaurants, institutional kitchens and grocery stores. The food and beverage processing industry may be dairy, sugar, brewery, meat packing industry. Wastes and products from farms may also be used. Farming is considered including agriculture and animal breeding but also aquaculture. Agricultural materials such as agricultural wastes and/or crops may be used. Animal breeding may be done on-shore or off-shore as may be seen below. Aquaculture, also known as aquafarming, is the farming of aquatic organisms. Aquacultural materials such as their wastes, i.e. by-products and excess products from the breeding and cultivation of aquatic plants, fish, crustaceans and molluscs may be used. Among aquatic plants, algae and seaweed may be mentioned. Wastes and products include cereals, such as maize, wheat, oat, barley, rye or millet; vegetables, such as beet root, carrots, potatoes, turnips, cauliflower, cabbage, onions, pumpkins, legumes; other plant materials selected from clover, lucerne, the fruits of the cacao tree or coffee plant; manure, such as fluid or solid manure from livestock, e.g. poultry, ruminants, which may be cattle or sheep, and pigs; silages, such as crop silages, wherein the crop may be beans or grain, such as oat, rye and barley. Note that parts of plants or whole plants may be used. Other waste materials may come from the food industry, such as dairy products which may be milk, casein, whey, lactose, or cheese; sugar products which may be molasses; vegetable fats, such as linseed oil, glycerine, rapeseed oil, soya oil, sunflower oil, palm oil, chip fat and fat from flotation; offals; bakery residues including bread; yeasts from e.g. breweries; and fat containing food residues.

One preferred crop is cereals, more preferably maize. Maize containing materials are preferred as feedstock, such as e.g. maize containing pig manure or maize itself, parts of or the whole plant, may be used. In one embodiment the feedstock preferably comprises at least 40 weight-% maize.

The organic fraction of urban wastes may be the organic fraction of municipal solid waste. The digestate may preferably originate from digestion of a feedstock comprising the organic fraction of municipal solid waste.

### Examples

### Example 1

1.5 liters of digestate from a biogas plant that used maize as the feedstock (dry solids 6.34 weight-%) was taken. Under stirring, 0.25 ml of defoamer (Bevaloid 5000, Kemira Oyj) was added to control the foaming during the reaction. 19.9 ml of ferrous chloride solution (PIX-211, Kemira Oyj, Fe content 11 weight-%) was added to obtain Fe 30 kg/ton dry solids. The pH was reduced to 4.9 by adding 6 ml of 96 % sulphuric acid. 7 ml of 35 weight-% H₂O₂ was then added (corresponds to 30 kg 100% H₂O₂ / ton dry solids) and the mixture was let to react. After 10 min reaction time, pH was adjusted to 5 by adding 27 ml of 50% NaOH. 200 ml of so prepared mixture was then flocculated by using 40 ml of 0.1 % polymer solution (cationic polyacrylamide Superfloc C-492 HMW, Kemira Oyj). Dewatering was carried out by pouring the sample onto 0.5 mm metal sieve and gravimetrically separating the solid and liquid. 70 ml of clear reject water was obtained, of which suspended solids was 360 mg/l and turbidity 46 NTU.

### Example 2

1.1 liters of digestate from a biogas plant that used maize as the feedstock (dry solids 6.9 weight-%) was taken. Under stirring, 0.75 ml of defoamer (Bevaloid 5000, Kemira Oyj) was added to control the foaming during the reaction. 8 ml of ferrous chloride solution (PIX-211, Kemira Oyj, Fe content 11 weight-%) was added to obtain Fe 15 kg/ton dry solids. The pH was reduced to 5 by adding 5.2 ml of 96 % sulphuric acid. 3.8 ml of 35 weight-% H₂O₂ was then added (corresponds to 20 kg 100% H₂O₂ / ton dry solids) and the mixture was let to react. After 10 min reaction time, pH was adjusted to 5 by adding 27 ml of 50% NaOH. 200 ml of so prepared mixture (pH 3.85) was then flocculated by using 50 ml of 0.1 % polymer solution (cationic polyacrylamide Superfloc C-491 HMW, Kemira Oyj). Dewatering was carried out by pouring the sample onto 0.8 mm metal sieve and gravimetrically separating the solid and liquid. Clear reject water was obtained, of which suspended solids was 560 mg/l and turbidity 451 NTU.

### Example 3

Similar batch as in the example 2 was prepared, but before flocculation pH was adjusted to 5 by using 50 % NaOH. 200 ml of so prepared mixture was flocculated by using 40 ml of 0.1 % polymer solution (C-491 HMW). Dewatering was carried out by pouring the sample onto 0.8 mm metal sieve and gravimetrically separating the solid and liquid. Clear reject water was obtained, of which suspended solids was 330 mg/l and turbidity 323 NTU.

### Example 4

1.4 liters of digestate from a biogas plant that used maize as the feedstock (dry solids 6.9 weight-%) was taken. Under stirring, 1 ml of defoamer (Bevaloid 5000, Kemira Oyj) was added to control the foaming during the reaction. 20.5 ml of ferrous chloride solution (PIX-211, Kemira Oyj, Fe content 11 weight-%) was added to obtain Fe 30 kg/ton dry solids. The pH was reduced to 6 by adding 4 ml of 96 % sulphuric acid. 8.5 ml of 35 weight-% H₂O₂ was then added (corresponds to 35 kg 100% H₂O₂ / ton dry solids) and the mixture was let to react. After 10 min reaction time 200 ml of so prepared mixture was flocculated by using 40 ml of 0.1 % polymer solution (cationic polyacrylamide Superfloc C-491 HMW, Kemira Oyj). Dewatering was carried out by pouring the sample onto 0.8 mm metal sieve and gravimetrically separating the solid and liquid. Clear reject water was obtained, of which suspended solids was 240 mg/l and turbidity 145 NTU.

### Example 5

0.9 liters of digestate from a biogas plant that used maize as the feedstock (dry solids 6.34 weight-%) was taken. Under stirring, 8.2 ml of ferrous chloride solution (PIX-211, Kemira Oyj, Fe content 11 weight-%) was added to obtain Fe 20 kg/ton dry solids. The pH was reduced to 5.5 by adding 3.3 ml of 96 % sulphuric acid. 3.6 ml of 35 weight-% H₂O₂ was then added (corresponds to 25 kg 100% H₂O₂ / ton dry solids) and the mixture was let to react. After 10 min reaction time 200 ml of so prepared mixture was flocculated by using 60 ml of 0.1 % polymer solution (cationic polyacrylamide Superfloc C-492 HMW, Kemira Oyj). Dewatering was carried out by pouring the sample onto 0.5 mm metal sieve and gravimetrically separating the solid and liquid. 88 ml of clear reject water was obtained, of which suspended solids was 330 mg/l and turbidity 114 NTU.

### Example 6

1.5 liters of digestate from a biogas plant that used maize as the feed (dry solids 6.34 weight-%) was taken. Under stirring, 0.25 ml of defoamer (Bevaloid 5000, Kemira Oyj) was added to control the foaming during the reaction. 10.3 ml of ferrous chloride solution (PIX-211, Kemira Oyj, Fe content 11 weight-%) and 7.3 ml of ferric chloride solution (PIX-111, Kemira Oyj, Fe content 13.8 weight -%) was added to obtain Fe 30 kg/ton dry solids. The pH was reduced to 5 by adding 4.5 ml of 96 % sulphuric acid. 4.8 ml of 35 weight-% H₂O₂ was then added (corresponds to 20 kg 100% H₂O₂ / ton dry solids) and the mixture was let to react. After 10 min reaction time, pH was adjusted to 5 by adding 27 ml of 50% NaOH. 200 ml of so prepared mixture was then flocculated by using 40 ml of 0.1 % polymer solution (cationic polyacrylamide Superfloc C-493 HMW, Kemira Oyj). Dewatering was carried out by pouring the sample onto 0.5 mm metal sieve and gravimetrically separating the solid and liquid. 74 ml of clear reject water was obtained, of which suspended solids was 290 mg/l and turbidity 104 NTU.

### Example 7

7.0 kg of digestate from digesting organic fraction of household waste (100 %) (dry solids 2.2 weight- %) was taken. Under stirring, defoamer was added to control the foaming during the reaction (8 kg/ton dry solids). Ferrous sulphate solution was added (Fe content 3.35 weight-%) to obtain Fe 0.6 weight-%/ ton dry solids. pH was reduced to 5 by adding 25 ml of 96 % sulphuric acid. Then 50 % H₂O₂ solution was added to get 35.6 kg H₂O₂ / ton dry solids of and the reaction mixture let to react. pH was let to stabilize to 5.3. 200 ml of so prepared reaction mixture was then flocculated by using 25 ml of 0.1 weight-% cationic polyacrylamide solution (C-492HMW, Kemira Oyj). Dewatering was carried out by pouring the sample onto 0.6 mm metal sieve and gravimetrically separating the solid and liquid. 180 ml of reject water was obtained, of which suspended solids was 750 mg/l, turbidity 215 NTU, N-tot 872 mg/l, P-tot 28 mg/l and COD 3470 mg/l.

### Example 8

0.75 kg of digestate from digesting organic fraction of household waste (100 %) (dry solids 274 weight-%) was taken. Under stirring, defoamer was added to control the foaming during the reaction (6 kg/ton dry solids). Ferrous sulphate solution was added (Fe content 3.35 weight-%) to obtain Fe 048 weight-%/ton dry solids. pH was reduced to 4.9 by adding 3.3 ml of 96 % sulphuric acid. Then 50 % H₂O₂ solution was added to get 29 kg H₂O₂ / ton dry and the reaction mixture let to react. pH was let to stabilize to 5.3. 200 ml of so prepared reaction mixture was flocculated by using 25 ml of 0.1 weight-% cationic polyacrylamide solution (C-492HMW, Kemira Oyj). Dewatering was carried out by pouring the sample onto 0,6 mm metal sieve and gravimetrically separating the solid and liquid. 165 ml of reject water was obtained, of which suspended solids was 920 mg/l and turbidity 216 NTU.

### Example 9

1.5 kg of digestate from digesting organic fraction of household waste (100 %) (dry solids 2.74 weight-%) was taken. Under stirring, defoamer was added to control the foaming during the reaction (6 kg/ton dry solids). Ferrous sulphate solution was added (Fe content 3.35 weight-%) to obtain Fe 0.48 weight-%/ ton dry solids. pH was reduced to 5.45 by adding 6.4 ml of 96 % sulphuric acid. Then 50 % H₂O₂ solution was added to get 20 kg H₂O₂ / ton dry solids of and the reaction mixture let to react. After 10 min reaction time, 200 ml of so prepared reaction mixture was flocculated by using 25 ml of 0.1 weight-% cationic polyacrylamide solution (C-492HMW, Kemira Oyj). Dewatering was carried out by pouring the sample onto 0.6 mm metal sieve and gravimetrically separating the solid and liquid. 160 ml of reject water was obtained, of which suspended solids was 1120 mg/l, turbidity 394 NTU, N-tot 857 mg/l, P-tot 30 mg/l and COD 4360 mg/l.

### Example 10

1.0 kg of digestate from digesting organic fraction of household waste (100 %) (dry solids 274 weight-%) was taken. Under stirring, defoamer was added to control the foaming during the reaction (6 kg/ton dry solids). Ferrous sulphate solution was added (Fe content 3.35 weight-%) obtain Fe 113 weight-%/ton dry solids. pH was reduced to 6 by adding 96 % sulphuric acid. Then 50 % H₂O₂ solution was added to get and the reaction mixture let to react. After 10 min reaction time, pH was stabilized to 6.23. 200 ml of so prepared reaction mixture was flocculated by using 25 ml of 0.1 weight-% cationic polyacrylamide solution (C-492HMW, Kemira Oyj). Dewatering was carried out by pouring the sample onto 0.6 mm metal sieve and gravimetrically separating the solid and liquid. 150 ml of reject water was obtained, of which suspended solids was 1390 mg/l, turbidity 670 NTU, N-tot 929 mg/l, P-tot 28 mg/l and COD 4120 mg/l.

### Comparative example 11

200 ml of untreated digestate from digesting organic fraction of household waste (100 %) was flocculated by using 40 ml of 0.1 weight-% cationic polyacrylamide solution (C-492HMW, Kemira Oyj). Dewatering was carried out by pouring the sample onto 0.6 mm metal sieve and gravimetrically separating the solid and liquid. 170 ml of reject water was obtained, of which suspended solids was 3140 mg/l, turbidity >10000 NTU.

## Claims

1. A method of treating a feedstock comprising 50 to 100 weight-% of products and wastes from farms, and/or food and beverage handling and subjecting the feedstock to an anaerobic treatment of a biogas plant to obtain a slurry comprising a digestate from said biogas plant, said method further comprising the steps of:
a) providing the slurry comprising the digestate from said biogas plant,
b) obtaining an acidic slurry at a pH of at most 6.5, by addition of an acidic material to lower the pH of the slurry comprising a digestate from a biogas plant, if the slurry comprising a digestate from a biogas plant is not already at a pH of at most 6.5,
c) supplying the slurry with a divalent iron salt, in an amount, based on iron, of 5-70 kg/ton dry solids of the digestate,
d) supplying the slurry with an oxidiser selected from hydrogen peroxide and percompounds in an amount of 5-50 kg/ton dry solids of the digestate, and allowing to react,
e) adding a flocculating polymer to the slurry obtained in d),
f) dewatering the slurry obtained in e),
wherein the acidic material of step b) is an acid and/or the divalent iron salt of step c).

2. The method according to claim 1, wherein the dry solids content of the digestate is from 2 to 15 weight-%.

3. The method according to claim 1 or 2, wherein the pH of the slurry is between 3.0 and 6.5, preferably 3.0 to 6.0, more preferably 3.5 to 6.0.

4. The method according to any one of claims 1-3, wherein the divalent iron salt is chosen from iron sulphate and iron chloride.

5. The method according to any one of claim 1-4, wherein the oxidiser is hydrogen peroxide.

6. The method according to any one of claim 1-5, wherein the iron salt and oxidiser added to the slurry and allowed to react during a residence time of at least 5 min, preferably at least 10 min.

7. The method according to any one of claim 1-6, wherein the flocculating polymer is added in an amount of 1-10 kg/ton dry solids of the digestate.

8. The method according to any one of claim 1-7, wherein the flocculating polymer is a polyacrylamide, preferably a cationic polyacrylamide.

9. The method according to any one of claim 1-8, wherein the digestate originates from digestion of a feedstock comprising municipal solid waste.

10. The method according to any one of claim 1-8, wherein the digestate originates from digestion of a feedstock comprising agricultural wastes and/or crops, preferably maize containing materials, preferably maize.

11. The method according to claim 10, wherein the feedstock comprises at least 40 weight-% maize.

## Patentansprüche

1. Verfahren zur Behandlung eines Ausgangsmaterials, das etwa 50 bis 100 Gew.-% Produkte und Abfälle aus landwirtschaftlichen Betrieben und/oder der Lebensmittel- und Getränkeverarbeitung umfasst, und Unterwerfen des Ausgangsmaterials einer anaeroben Behandlung einer Biogasanlage, so dass ein Schlamm erhalten wird, der einen Gärrest aus der Biogasanlage umfasst, wobei das Verfahren zudem die Schritte umfasst:
a) Bereitstellen des Schlamms, der einen Gärrest aus der Biogasanlage umfasst,
b) Erhalten eines sauren Schlamms bei einem pH-Wert von höchstens 6,5 durch Zugabe eines sauren Materials, um den pH-Wert des Schlamms, der einen Gärrest aus einer Biogasanlage umfasst, zu senken, wenn der Schlamm, der einen Gärrest aus einer Biogasanlage umfasst, noch nicht bei einem pH-Wert von höchstens 6,5 liegt,
c) Versorgen des Schlamms mit einem zweiwertigen Eisensalz, in einer auf das Eisen bezogenen Menge von 5 bis 70 kg/Tonne trockener Feststoffe des Gärrests,
d) Versorgen des Schlamms mit einem Oxidationsmittel, ausgewählt aus Wasserstoffperoxid und Perverbindungen, in einer Menge von 5 bis 50 kg/Tonne trockener Feststoffe des Gärrests, und Umsetzenlassen,
e) Zugabe eines ausflockenden Polymers zu dem in d) erhaltenen Schlamm,
f) Entwässern des in e) erhaltenen Schlamms,
wobei das saure Material von Schritt b) eine Säure und/oder das zweiwertige Eisensalz von Schritt c) ist.

2. Verfahren nach Anspruch 1, wobei der Gehalt an trockenen Feststoffen des Gärrests 2 bis 15 Gew.-% beträgt.

3. Verfahren nach Anspruch 1 oder 2, wobei der pH-Wert des Schlamms zwischen 3,0 und 6,5, vorzugsweise 3,0 bis 6,0, stärker bevorzugt 3,5 bis 6,0 ist.

4. Verfahren nach einem der Ansprüche 1 bis 3, wobei das zweiwertige Eisensalz aus Eisensulfat und Eisenchlorid ausgewählt ist.

5. Verfahren nach einem der Ansprüche 1 bis 4, wobei das Oxidationsmittel Wasserstoffperoxid ist.

6. Verfahren nach einem der Ansprüche 1 bis 5, wobei das Eisensalz und das Oxidationsmittel dem Schlamm zugesetzt werden und während einer Verweilzeit von mindestens 5 min, vorzugsweise mindestens 10 min, umgesetzt werden.

7. Verfahren nach einem der Ansprüche 1 bis 6, wobei das ausflockende Polymer in einer Menge von 1 bis 10 kg/Tonne trockener Feststoffe des Gärrests zugegeben wird.

8. Verfahren nach einem der Ansprüche 1 bis 7, wobei das ausflockende Polymer ein Polyacrylamid, vorzugsweise ein kationisches Polyacrylamid, ist.

9. Verfahren nach einem der Ansprüche 1 bis 8, wobei der Gärrest aus der Faulung eines Ausgangsmaterials stammt, das kommunale feste Abfälle umfasst.

10. Verfahren nach einem der Ansprüche 1 bis 8, wobei der Gärrest aus der Faulung eines Ausgangsmaterials stammt, das landwirtschaftliche Abfälle und/oder Feldfrüchte, vorzugsweise maishaltige Materialien, vorzugsweise Mais, umfasst.

11. Verfahren nach Anspruch 10, wobei das Ausgangsmaterial mindestens 40 Gew.-% Mais umfasst.

## Revendications

1. Méthode de traitement d'un stock d'alimentation comprenant de 50 à 100% en poids de produits et de déchets issus d'exploitations agricoles, et/ou de la manipulation d'aliments et de boissons, et la soumission du stock d'alimentation à un traitement anaérobie d'une centrale à biogaz afin d'obtenir une suspension comprenant un digestat issu de ladite centrale à biogaz, ladite méthode comprenant en outre les étapes consistant à :
a) fournir la suspension comprenant le digestat issu de ladite centrale à biogaz,
b) obtenir une suspension acide à un pH d'au plus 6,5, par l'addition d'un matériau acide afin d'abaisser le pH de la suspension comprenant un digestat issu d'une centrale à biogaz, si la suspension comprenant un digestat issu d'une centrale à biogaz n'est pas déjà à un pH d'au plus 6,5,
c) fournir à la suspension un sel de fer divalent, selon une quantité, basée sur le fer, de 5-70 kg/tonne de matières solides sèches du digestat,
d) fournir à la suspension un oxydant choisi parmi le peroxyde d'hydrogène et les composés peroxyliques selon une quantité de 5-50 kg/tonne de matières solides sèches du digestat, et laisser réagir,
e) ajouter un polymère de floculation à la suspension obtenue en d),
f) déshydrater la suspension obtenue en e),
dans laquelle le matériau acide de l'étape b) est un acide et/ou le sel de fer divalent de l'étape c).

2. Méthode selon la revendication 1, dans laquelle la teneur en matières solides sèches du digestat va de 2 à 15% en poids.

3. Méthode selon la revendication 1 ou 2, dans laquelle le pH de la suspension est compris entre 3,0 et 6,5, préférablement de 3,0 à 6,0, plus préférablement de 3,5 à 6,0.

4. Méthode selon l'une quelconque des revendications 1-3, dans laquelle le sel de fer divalent est choisi parmi le sulfate de fer et le chlorure de fer.

5. Méthode selon l'une quelconque des revendications 1-4, dans laquelle l'oxydant est le peroxyde d'hydrogène.

6. Méthode selon l'une quelconque des revendications 1-5, dans laquelle on ajoute le sel de fer et l'oxydant à la suspension et on les laisse réagir pendant un temps de séjour d'au moins 5 min, préférablement d'au moins 10 min.

7. Méthode selon l'une quelconque des revendications 1-6, dans laquelle le polymère de floculation est ajouté selon une quantité de 1-10 kg/tonne de matières solides sèches du digestat.

8. Méthode selon l'une quelconque des revendications 1-7, dans laquelle le polymère de floculation est un polyacrylamide, préférablement un polyacrylamide cationique.

9. Méthode selon l'une quelconque des revendications 1-8, dans laquelle le digestat a pour origine la digestion d'un stock d'alimentation comprenant des déchets ménagers.

10. Méthode selon l'une quelconque des revendications 1-8, dans laquelle le digestat a pour origine la digestion d'un stock d'alimentation comprenant des déchets agricoles et/ou des cultures, préférablement des matériaux contenant du maïs, préférablement du maïs.

11. Méthode selon la revendication 10, dans laquelle le stock d'alimentation comprend au moins 40% en poids de maïs.
